# EUROPEAN PATENT APPLICATION

(11) **EP 1 400 280 A1**
(43) Date of publication of application: **24.03.2004**
(21) Application number: 02292282.7
(22) Date of filing: 18.09.2002
(51) Int. Cl.: B01J 19/00, B01J 3/04

(54) **Apparatus and method for operating a microreactor at high pressure**

(71) Applicant: Corning Incorporated, Corning, New York 14831 (US)
(72) Inventor: Moreno, Maxime, 77300 Fontainebleau (FR); Woehl, Pierre, 77240 Cesson (FR)
(74) Representative: Boon, Graham Anthony

(57) **Abstract**

A chemical processing apparatus (10) is disclosed. The apparatus (10) includes a pressure vessel (12) and a microreactor (20) disposed within the pressure vessel (12). The pressure vessel (12) is constructed and arranged to maintain the pressure vessel (12) and the microreactor (20) at elevated pressure when a chemical operation is performed within the apparatus (10). A method of operating a microreactor (20) at high pressure is also disclosed.

## Description

### BACKGROUND OF THE INVENTION

### 1. FIELD OF THE INVENTION

The present invention relates generally to the field of miniaturized chemical processing and/or analysis apparatus and more particularly, to the operation of microreactors at elevated pressure.

### 2. TECHNICAL BACKGROUND

In order to effectively and efficiently analyze, process, and/or manufacture chemicals, it is generally necessary to precisely control a number of processing parameters, such as, but not limited to, temperature, pressure, mixing conditions, exposure conditions, and in some cases, conditions necessary to achieve separation of reaction products.

Conventional chemical processing equipment typically holds a relatively large volume of materials and consequently has a relatively large volume to surface area ratio. When reactions occur within such conventional chemical processing equipment, it is typically likely that different portions of the reactant materials contained within the equipment are exposed to different histories of conditions. In the case of a conventional tank reactor, for example, even when the temperature conditions at the walls of the reactor are well controlled, the portions of the reactants that are not in close proximity to the walls of the reactor may experience different temperature histories, especially if a significant temperature gradient exists, which might occur if the chemical reaction is strongly exothermic. Rapid stirring of the reactants may reduce this temperature history difference, but will not eliminate it. As a result of the non-homogenous temperature history, different portions of the reactants may chemically react differently. In addition undesired reactions may occur in portions of the reactants that are exposed to histories of higher than desired temperatures. The result may be undesired waste products, in some cases hazardous waste products, and in extreme cases reaction rates that may accelerate to uncontrollable levels which may pose hazardous risks such as the potential for explosions.

In view of these shortcomings, the chemical processing industry has shifted its attention to the development of miniaturized chemical processing apparatus known by terms such as microfluidic devices and microreactors. Such microfluidic devices or microreactors typically possess high surface area to volume ratios, which significantly improve the degree of precision of control of homogeneity of temperature history of the reactants processed within such devices. In addition to analysis, hazardous waste remediation and research based testing, microreactors may also be utilized for the transformation of various materials to other materials and for the continuous production of chemicals.

Microfluidic devices, also known as microreactors, are structures familiar to those skilled in the art, structures for which numerous applications have already been described, in particular in references such as: Microreaction Technology, 3^{rd} International Conference on Microreaction Technology, edited by W. Ehrfeld, published by Springer-Verlag, Berlin (2000); and Micro-total Analysis Systems 2000, edited by A. Van Den Berg, W. Olthius, and P. Bergveld, published by Kluwer Ac Publishers (2000). Within such structures, in volumes that are small (having a characteristic dimension that generally lies in the range of 10.0 micrometers (µm) to 10,000.0 µm), fluids may be, among other things, passed, analyzed, mixed together, and/or caused to react.

Such devices known in the art include, microfluidic devices made of various types of material, and in particular of metals, silicon, polymers, ceramics, quartz, and/or glass. Such microreactors may include single devices or a plurality of single devices either stacked or otherwise arranged to be in fluid communication with one another. Each of the above-mentioned materials have their own unique shortcomings. For example, devices made of polymers cannot withstand temperatures of more than 200°C to 300°C over a prolonged period of time. Moreover, it is often difficult to control surface states effectively within such structures. Silicon devices are expensive, incompatible with certain biological fluids, and the semiconductive nature of silicon gives rise to problems with implementing certain pumping techniques, such as electro-hydrodynamic pumping and electro-osmotic pumping. Devices made of metal are liable to corrode, and in like manner, are typically not compatible with certain biological fluids.

While microreactors made of glass, glass ceramic, or ceramic do not typically share the above-mentioned shortcomings, and although they are particularly appreciated for their insulating nature, for their resistance or even inertness in the face of chemical attack, for their transparency, for their surface homogeneity, and for the ease with which their surfaces can be modified chemically, such microreactors share an important limitation with all other known microreactors. Specifically, microreactors presently known in the art, regardless of their construction, are limited to operation at relatively low pressure. Generally speaking, known microreactors are capable of operation at pressures up to about 15.0 bar. Operating known microreactors at higher pressures may likely result in damage to the microreactor and/or dangerous operating conditions.

What is needed therefore, but presently unavailable in the art, is a chemical processing apparatus and method that overcomes this and other shortcomings associated with the operation of microreactors at elevated pressure levels. Such an apparatus should be capable of operating at pressures of between 15.0 bar and 100.0 bar, and for some applications, up to and greater than 1000.0 bar, and should be well suited for processing materials for the chemical, pharmaceutical, and biotechnology industries. The apparatus of the present invention will also be well suited for the continuous production of a wide variety of chemicals and chemical compounds. It is to the provision of such an apparatus and method that the present invention is primarily directed.

### SUMMARY OF THE INVENTION

One aspect of the present invention relates to a chemical processing apparatus. The chemical processing apparatus includes a pressure vessel and a microreactor disposed within the pressure vessel. The pressure vessel is constructed and arranged to maintain the pressure vessel and the microreactor at elevated pressure when a chemical operation is performed within the apparatus.

In another aspect, the present invention is directed to a method of operating a microreactor at high pressure. The method includes the steps of disposing a microreactor within a pressure vessel, increasing the pressure within the microreactor and the pressure vessel, and performing a chemical operation within the pressure vessel.

In another aspect the present invention relates to a chemical processing apparatus. The chemical processing apparatus includes a pressure vessel, a microreactor housed within the pressure vessel, and a sealing mechanism cooperating with the pressure vessel to maintain the microreactor and the pressure vessel at elevated pressure while a chemical operation is performed within the pressure vessel.

The chemical processing apparatus and method of operating a microreactor at high pressure of the present invention results in a number of advantages over other chemical processing apparatus and methods known in the art. For example, since the pressure differential between the inside and outside of the microreactor may be controlled, the pressure differential between the inside and outside of the microreactor may be maintained at or below 15.0 bar, the typical upper operating limit of most microreactors, even though the operating pressure within the microreactor is greater than 15.0 bar. Accordingly, the material(s) used to manufacture the microreactors incorporated in the present invention does not need to be selected to meet any specific pressure requirements. In addition, the operation of such microreactors in accordance with the method of the present invention provides for a safer work environment. Moreover, temperature control for the microreactor can be achieved by controlling the temperature of the pressure vessel housing the microreactor, rather than by the more difficult task of directly controlling the temperature of the microreactor itself.

Additional features and advantages of the invention will be set forth in the detailed description which follows and in part will be readily apparent to those skilled in the art from that description or recognized by practicing the invention as described herein.

It is to be understood that both the foregoing general description and the following detailed description are merely exemplary of the invention, and are intended to provide an overview or framework for understanding the nature and character of the invention as it is claimed. The accompanying drawings are included to provide further understanding of the invention, illustrate various embodiments of the invention, and together with the description serve to explain the principles and operation of the invention.

### BRIEF DESCRIPTION OF THE DRAWINGS

**FIG 1**. schematically illustrates a preferred embodiment of a chemical processing apparatus in accordance with the present invention.
**FIG. 2** schematically illustrates a second preferred embodiment of a chemical processing apparatus in accordance with the present invention.
**FIG. 3** schematically illustrates a third preferred embodiment of a chemical processing apparatus in accordance with the present invention.

### DETAILED DESCRIPTION OF THE PREFERRED EMBODIMENTS

The chemical processing apparatus of the present invention may incorporate any number of microstructure devices, known generally in the art as microreactors, for micro-scale fluid handing, processing and investigation. The present invention improves over known technologies as it permits such microreactors to operate at high pressure, i.e., pressures in excess of 10.0 bar, 15.0 bar, and even as high as 100s of bar. The microreactors employed in accordance with the present invention may be adapted for use in the course of analysis or synthesis procedures performed on or requiring microquantities of one or more fluids (liquid(s) and/or gas(es)), such as, but not limited to, electrophoresis, chromotography, or biosynthesis procedures. More particularly, microreactors employed in accordance with the present invention may perform any chemical operation or process. For the purpose of this disclosure, a chemical operation is defined as an operation that changes the state (thermodynamic state including chemical and/or physical state) of a working fluid including but not limited to condensation, evaporation, compression, pumping, heat exchanging, expansion, or chemical process, for example, chemical conversion or separation. Chemical reactions may be endothermic or exotheric and may be conducted noncatalytically, catalytically, photochemically, and/or electrochemically. Conversion reactions include, but are not limited to, partial oxidization, oxidization, hydrogenation and combustion. Generally speaking, separation involves receiving at least one chemical mixture having a chemical product and a product carrier, and separating the chemical product from the product carrier. Examples of such separations include, but are not limited to, electrophoretic separation, distillation, ion exchange, and solvent extractions.

In addition to one or more of the above-described microreactors, the apparatus of the present invention may also preferably include fluid flow handling and control components, mixers, separatory devices, process variable detectors and controllers, and computer interface modules for communicating with a master controller, if desired. The fluid control components may include pumps, flow channels, manifolds, flow restrictors, valves, and/or other similar devices known in the art. The flow system may include detachable mixing devices, either static or ultrasonic. The separatory components may provide for membrane separation, concurrent or countercurrent flow extraction, chromotographic separation, electrophoretic separation, or distillation. Detectors may be of the electrochemical, spectroscopic, or fluorescent type and may preferably be used to monitor reactants, intermediates, or final products. A typical apparatus in accordance with the present invention may include, for example, a microreactor having one or more serpentine microchannels, a flow mixer, an electrochemical reaction chamber, an electrophoretic separation chamber, and an electrochemical analyzer.

Although any known microreactor properly sized and shaped to cooperate with the pressure vessel may be employed in the apparatus of the present invention, a glass, glass-ceramic or ceramic microreactor as disclosed in U.S. Patent Application Serial No. 10/163,215, filed, June 4, 2002, commonly owned by Corning, Incorporated, which is hereby incorporated herein by reference, is particularly well suited for the chemical operations capable of being performed in connection with the apparatus of the present invention. Unless otherwise specifically stated herein, the structure and operation of the apparatus of the present invention will be described with reference to such a microreactor.

Generally speaking, and in accordance with one aspect of the present invention, one or more fluids to be processed may be introduced into a microreactor housed within a pressure vessel through an inlet line passing through the pressure vessel wall. At least one fluid of the one or more fluids may preferably also be introduced into the volume surrounding the microreactor within the pressure vessel, either through the same inlet line or through a separate inlet line in order to elevate the pressure within the pressure vessel to a pressure that is close to or the same as the pressure within the microreactor. The one or more fluids may then preferably be urged through one or more tortuous microchannels defined within the microreactor to facilitate one or more chemical operations on the one or more fluids flowing therethrough. If desired, one or more unit operations such as, but not limited to, mixing, heat exchanging, separating, reacting catalytically, reacting noncatalytically, reacting photochemically, reacting photocatalytically, and/or reacting electrochemically may be performed before, during, or after the one or more fluids pass through the microchannels defined within the microreactor. Thereafter, one or more processed fluids may be withdrawn from within the pressure vessel through one or more outlet lines passing through the wall of the pressure vessel for further processing, or analysis.

Each of the above-mentioned operations may be performed individually or in conjunction with one or more unit operations in the same or different devices. Accordingly, the apparatus of the present invention may include a plurality of microreactors that may be structurally the same or structurally different. For instance, where a plurality of microreactors are utilized, different chemical processes may be performed in different microreactors. In addition, and as is known in the art, the microreactors may be stacked or otherwise integrally arranged with respect to one another, positioned in series or positioned in a parallel arrangement.

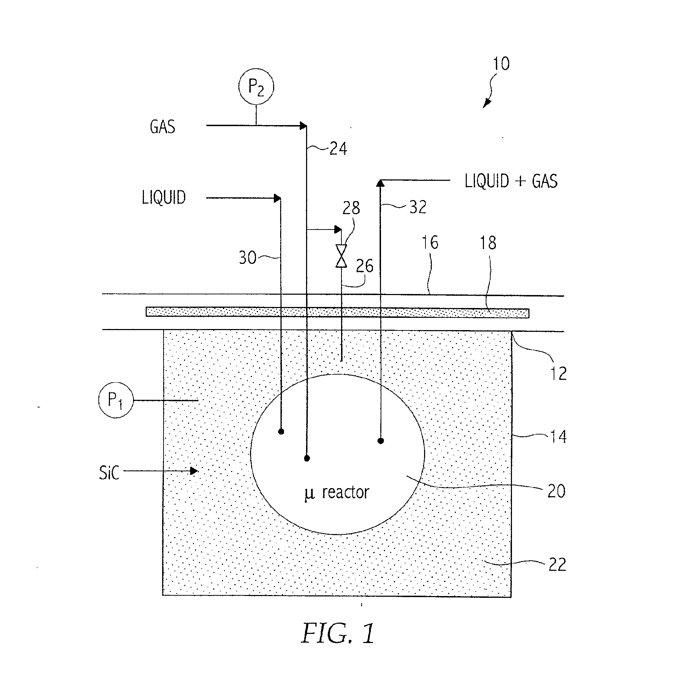

Reference will now be made in detail to the present preferred embodiments of the invention, examples of which are illustrated in the accompanying drawing figures. Wherever possible, the same reference numerals will be used throughout the drawing figures to refer to the same or like parts. An exemplary embodiment of the chemical processing apparatus of the present invention is shown in Fig. 1 and is designated generally throughout by reference numeral 10.

As depicted in Fig. 1, chemical processing apparatus 10 preferably includes a pressure vessel 12 having an internal volume defined by pressure vessel walls 14 and a removable cover 16. Removable cover 16 preferably includes a sealing mechanism such as a standard O-ring made of metal, such as stainless steel, or some other suitable material, which creates a pressure resistant seal between removable cover 16 and walls 14 of pressure vessel 12. While a conventional O-ring based sealing mechanism 18 is depicted in each of the drawing figures, one of skill in the art will recognize that any mechanism capable of providing a pressure resistant seal, whether incorporated in removable cover 16 or on walls 14 of pressure vessel 12, may be utilized in connection with chemical processing apparatus 10 of the present invention. Although any container capable of withstanding significant pressures, typically on the order of 100s of bar will satisfy the operational requirements of the present invention, a conventional autoclave may preferably be employed.

Chemical processing apparatus 10 further preferably includes a microreactor 20 supported within the inner volume of pressure vessel 12 by a heat conductive medium 22, or otherwise. In a preferred embodiment of the present invention, heat conductive medium 22 may be silicon carbide (SiC). The SiC may preferably be deposited around microreactor 20 in particulate form, preferably having a particle size of between about 5.0 microns to about 1000.0 microns, and more preferably, between about 100.0 microns and 500.0 microns, and preferably serves as a heat exchange medium within pressure vessel 12. While SiC is depicted in each of the drawing figures, one of skill in the art will recognize that any medium capable of providing adequate thermal exchange (e.g., other solids, oils, other liquids, gases and any other medium) are operative with the present invention.

In accordance with the operation of the first preferred embodiment of the present invention depicted in Fig. 1, a fluid, preferably a gas such as hydrogen, nitrogen or oxygen is introduced into microreactor 20 via a first fluid supply line 24, and also introduced into the internal volume of pressure vessel 12 via a pressure equalization line 26 that is fed from first fluid supply line 24. A flow control valve 28 may optionally be employed along pressure equalization line 26 to control the flow of fluid entering pressure vessel 12. In the case of a hydrogenation reaction, gaseous hydrogen will be introduced into microreactor 20 and pressure vessel 12 such that the pressure differential between the internal volume of microreactor 20 and the internal volume of pressure vessel 12 is maintained below the maximum pressure limit of microreactor 20. Generally speaking, and depending upon the type and construction of microreactor 20 utilized, the pressure differential will be maintained below about 15.0 bar and more preferably, below about 5.0 bar.

A second fluid, either a gas or liquid may then be introduced into microreactor 20 via a second fluid supply line 30, at which time the desired chemical operation will be initiated within microreactor 20. The resulting reaction product and any other fluid, either liquid or gas, may then be withdrawn from microreactor 20 through a fluid output line 32 that may be collected, analyzed, or further processed. During the reaction, the heat conductive medium 22, in this case SiC, facilitates heat exchange and thus temperature control of microreactor 20 and thus the reaction process.

In accordance with the operation of the present invention, and unlike conventional batch reactors, resistance to high pressure is no longer a limiting factor in the types and rates of chemical reactions and other chemical processing within microreactors. Since the quantity of fluid which is under pressure in a microreactor is extremely small, the chemical processing apparatus 10 of the present invention is extremely safe to operate. In addition, because the fluid inlet/outlet lines 24, 30, 32 are connected to the microreactor 20 within pressure vessel 12, the connections are also maintained at a pressure differential of less than about 15 bar. Accordingly, conventional devices may be utilized to facilitate connection of the fluid supply/output lines. Moreover, conventional fittings, seals, valves, and other connectors and flow control mechanisms may be utilized to make any fluid line connections upstream and downstream of pressure vessel 12.

Although not shown in the drawing figures, one of skill in the art will recognize that gaskets, or some other sealing mechanism may preferably be utilized to seal the locations along pressure vessel 12 where fluid supply/output lines 24, 30, 32 and pressure equalization line 28 pass through pressure vessel 12, in this case along removable cover 16.

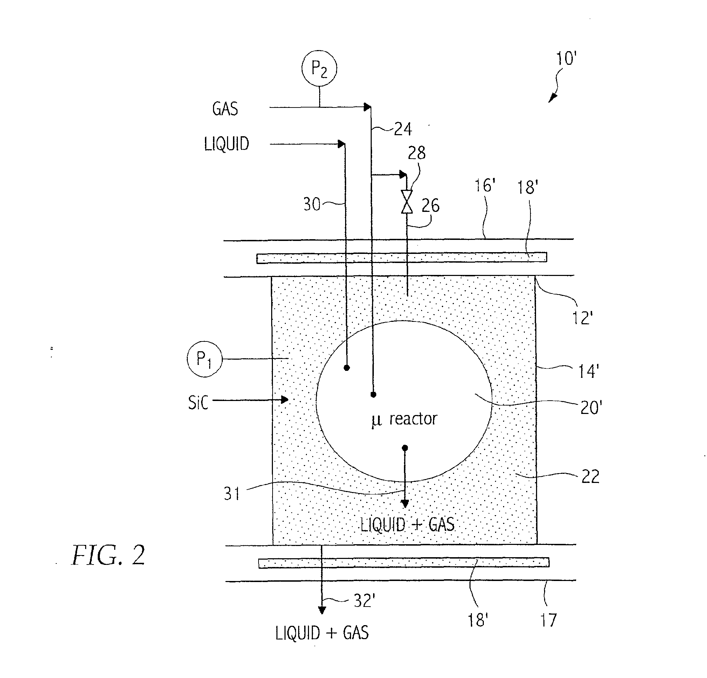

A second preferred embodiment of chemical processing apparatus 10' is depicted in Fig. 2. Chemical processing apparatus 10' includes a pressure vessel 12' having walls 14', a removable cover 16', and a removable bottom 17. Both removable cover 16 and removable bottom 17 include a sealing mechanism 18', such as a standard O-ring. A microreactor 20' is disposed within pressure vessel 12' such that it is surrounded by a heat conductive medium 22, preferably SiC.

In accordance with the operation of chemical processing apparatus 10', one or more fluids are supplied to microreactor 20' and pressure vessel 12' by fluid supply lines 24 and 30 and pressure equalization line 26, respectively. Unlike the first preferred embodiment of the chemical processing apparatus 10 of the present invention, the microchannel outlet 31 of microreactor 20' is not sealably connected to a fluid output line. Instead, microchannels within microreactor 20' are opened to the internal volume of pressure vessel 12'. As a result, the reaction products produced within microreactor 20' flow freely within pressure vessel 12' prior to being withdrawn through fluid output line 32' passing through removable bottom 17 of pressure vessel 12'.

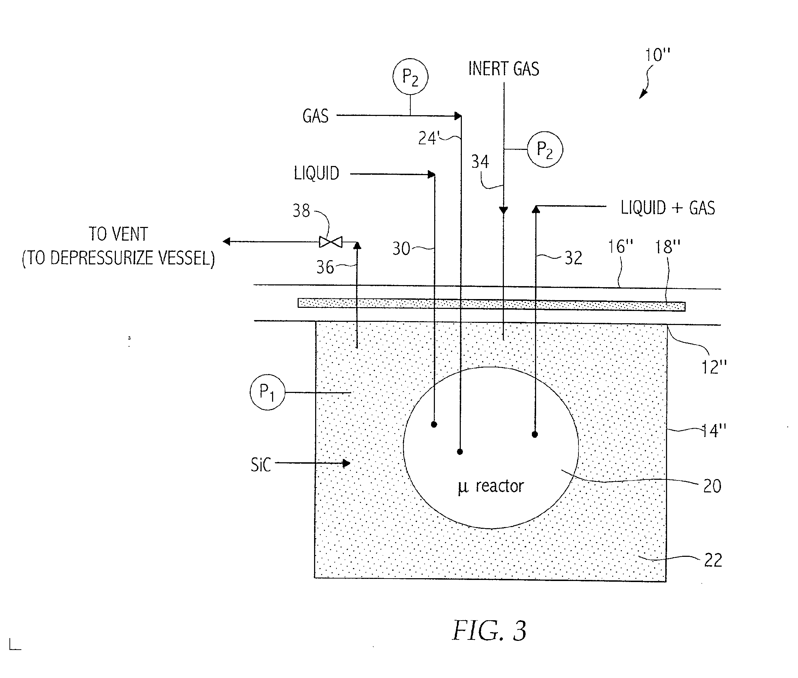

A third preferred embodiment of chemical processing apparatus 10" is depicted in Fig. 3. Like the other embodiments of the present invention, chemical processing apparatus 10" includes a pressure vessel 12" having pressure vessel walls 14" and a removable cover 16" incorporating a sealing mechanism 18" such as a standard O-ring. A microreactor 20 is disposed within heat conductive medium 22, preferably SiC, within pressure vessel 12'.

In accordance with the operation of chemical processing apparatus 10", reaction fluids are supplied to microreactor 20 through a first fluid supply line 24' and a second fluid supply line 30. A pressure equalization fluid, preferably an inert gas, is preferably simultaneously supplied to the internal volume of pressure vessel 12' via a separate pressure equalization line 34. Following a chemical operation such as a hydrogenation reaction, reaction products and other fluids are discharged from microreactor 20 and pressure vessel 12" through a fluid output line 32 sealably connected to the microchannel outlet of microreactor 20. An optional ventilation line 36 having an optional ventilation control valve 38 is preferably employed in order to enable the depressurization of pressure vessel 12" and microreactor 20 and to provide for more accurate pressure control.

While the invention has been described in detail, it is to be expressly understood that it will be apparent to persons skilled in the relevant art that the invention may be modified without departing from the spirit of the invention. Various changes of form, design or arrangement may be made to the invention without departing from the spirit and scope of the invention. For example, the same fluid supply line may be used to feed more than one fluid into the microreactor in accordance with an alternative embodiment of the present invention. Alternatively, or in addition, more than one fluid output line could be used in further alternative embodiments. Therefore, the above mentioned description is. to be considered exemplary, rather than limiting, and the true scope of the invention is that defined in the following claims.

## Claims

1. A chemical processing apparatus comprising:
a pressure vessel; and
a microreactor disposed within the pressure vessel, the pressure vessel constructed and arranged to maintain the pressure vessel and the microreactor at elevated pressure when a chemical operation is performed within the apparatus.

2. The chemical processing apparatus of claim 1 wherein the microreactor comprises a material selected from the group consisting of nonmetallic elements of groups III, IV and V of the Periodic Table, ceramics, glasses, glass ceramics, polymers, composite materials, silicon and metals.

3. The chemical processing apparatus of claim 1 wherein the pressure vessel comprises an autoclave.

4. The chemical processing apparatus of claim 1 further comprising a heat conductive medium communicating with the microreactor within the pressure vessel.

5. The chemical processing apparatus of claim 4 wherein the heat conductive medium comprises SiC.

6. The chemical processing apparatus of claim 1 wherein the microreactor is configured to accommodate any of a plurality of operations.

7. The chemical processing apparatus of claim 1 further comprising a first inlet fluid feedline passing through the pressure vessel and into the microreactor for increasing the pressure within the microreactor and a second inlet fluid feedline extending into the pressure vessel for increasing the pressure within the pressure vessel.

8. A method of operating a microreactor at high pressure, the method comprising the steps of:
disposing a microreactor within a pressure vessel;
increasing the pressure within the microreactor and the pressure vessel; and
performing a chemical operation within the pressure vessel while the microreactor and the pressure vessel are maintained at elevated pressure.

9. The method of claim 8 further comprising the step of maintaining a pressure differential of less than about 15.0 bar between the interior of the microreactor and the internal volume of the pressure vessel surrounding the microreactor during the increasing and performing steps.

10. The method of claim 8 further comprising the step of maintaining a pressure differential of between about 0.0 bar and 5.0 bar between the interior of the microreactor and the internal volume of the pressure vessel surrounding the microreactor during the increasing and performing steps.

11. The method of claim 8 wherein the increasing step comprises the step of feeding a fluid into the microreactor and into the pressure vessel via at least one inlet feed line.

12. The method of claim 8 wherein the increasing step comprises the steps of feeding a first fluid into the microreactor via a first inlet feed line and feeding a second fluid, different from the first fluid into the pressure vessel via a second feed line.

13. The method of claim 11 further comprising the step of feeding a target fluid into the microreactor prior to the performing step.

14. The method of claim 13 further comprising the step of outputting the fluids fed into the microreactor externally of the pressure vessel via an outlet line extending from the interior of the microreactor to the exterior of the pressure vessel.

15. The method of claim 13 further comprising the steps of allowing the fluids fed into the microreactor to flow into the internal volume of the pressure vessel and then directing the fluids from the internal volume of the pressure vessel to outside the pressure vessel via an outlet line.

16. The method of claim 8 further comprising the step of disposing a heat conductive medium within the pressure vessel such that the heat conductive medium is in thermal communication with the microreactor.

17. A chemical processing apparatus comprising:
a pressure vessel;
a microreactor housed with the pressure vessel; and
a sealing mechanism cooperating with the pressure vessel to maintain the microreactor and the pressure vessel at elevated pressure while a chemical operation is performed within the apparatus.

18. The chemical processing apparatus of claim 17 wherein the microreactor and the pressure vessel each define an internal volume and wherein the internal volume of the microreactor is open to the internal volume of the pressure vessel.

19. The chemical processing apparatus of claim 17 wherein the microreactor and the pressure vessel each define an internal volume and wherein the internal volume of the microreactor is sealed with respect to the internal volume of the pressure vessel.

20. The chemical processing apparatus of claim 17 further comprising a heat conductive medium in thermal communication with the microreactor within the pressure vessel.
